# EUROPÄISCHE PATENTSCHRIFT

(11) **EP 4 352 393 B1**
(45) Veröffentlichungstag und Bekanntmachung des Hinweises auf die Patenterteilung: **01.04.2026**
(21) Anmeldenummer: 22732213.8
(22) Anmeldetag: 09.06.2022
(51) Int. Cl.: F16K 1/44, F16K 31/122, F16K 37/00

(54) **DOPPELSITZVENTIL**
DOUBLE SEAT VALVE
ROBINET À DOUBLE SIÈGE

(30) Priorität: 11.06.2021 DE 102021003018
(43) Veröffentlichungstag der Anmeldung: 17.04.2024
(73) Patentinhaber: GEA Tuchenhagen GmbH, 21514 Büchen (DE)
(72) Erfinder: LEITER, Frank, 21493 Schwarzenbek (DE)
(74) Vertreter: Hauck Patent- und Rechtsanwälte PartmbB
(86) Internationale Anmeldenummer: PCT/EP2022/065663
(87) Internationale Veröffentlichungsnummer: WO 2022/258742

(56) Entgegenhaltungen:
- EP-A1- 3 141 971
- WO-A1-2012/130904
- DE-A1- 4 220 967
- US-A1- 2004 211 928
- US-A1- 2014 311 600
- US-A1- 2019 137 000

## Beschreibung

Die Erfindung betrifft ein Doppelsitzventil nach dem Oberbegriff von Anspruch 1.

Doppelsitzventile werden in Anlagen zur Herstellung von Lebensmitteln, Getränken, Medikamenten und feinchemischen Produkten sowie in der Biotechnologie eingesetzt. In solchen Prozessanlagen ist ein hoher Grad an Automatisierung gewünscht, in der auch die Ventile erfasst und eingebunden sind.

Doppelsitzventile besitzen zwei Schließelemente mit veränderlicher Stellung zur Beeinflussung der Fluidströmung durch das Ventil. Zur Automatisierung gehört es, die Stellung der Schließelemente bestimmen zu können. Die Bestimmung der Stellung erfolgt in der Regel mit Hilfe eines Ventilsteuergeräts, das Teil des Doppelsitzventils ist.

Die Stellungsmessung wurde schon vor vielen Jahren eingeführt. Beispielsweise schlägt die DE 4035017 C1 vor, mechanische Schalter im Ventilsteuergerät vorzusehen, deren Schaltstellung durch die Bewegung der Schließelemente verändert wird. Jedem Schließelement ist wenigstens ein Schalter zugeordnet.

Im weiteren Verlauf der technischen Entwicklung wurden die mechanischen Schalter durch berührungslose Systeme ersetzt. Beispielsweise werden in der DE 102006039493 B4 Hallsensoren, Lichtschranken und kapazitive Näherungssensoren vorgeschlagen.

Eine berührungslose Messung in einem Ventil mit lediglich einem Schließelement ist in der DE 102013018564 A1 vorgestellt. Hierbei ist im Ventilsteuergerät eine Sende- und Empfangsantennenanordnung vorgesehen, die mit einem einen Schwingkreis umfassenden Sensorobjekt am Schließelement zusammenwirkt. Durch das gesendete Signal wird der Schwingkreis angeregt, eine Resonanzwelle auszustrahlen. Der Entstehungsort der Resonanzwelle, welcher die Stellung des einen Schließelements repräsentiert, wird durch die Empfangsantennenanordnung ermittelt.

DE 42 20 967 A1 offenbart ein Ventil mit zwei mechanisch voneinander unabhängigen und jeweils mit mindestens einem Ventilteller versehenen Ventilstößel. Sie sind auf einer gemeinsamen Achse fluchtend gegenüberliegend angeordnet, durch einen Luftspalt beabstandet und verfügen über gegensinnige Betätigungsrichtungen. Ein die Positionen beider Ventilstößel erfassender Stellungssensor ist symmetrisch bezüglich der sich gegenüberliegenden Stirnflächen zwischen diesen angeordnet. An den Stirnflächen sind Permanentmagneten angeordnet und der Stellungssensor ist als Magnetfeldsensor ausgebildet. Es soll bei einer Mehrzahl von Ventilstößeln die Anzahl der Stellungsmelder minimiert werden und so der konstruktive Aufwand auf ein Mindestmaß beschränkt werden.

US 2019/0137000 A1 offenbart ein Ventilsteuerungskopf mit Ventilsteuerungselektronik und zumindest einem Kontrollventil und einem ersten Messobjekt, das mit einem Ventilverschlussteil verbunden ist. Mit einem ersten Positionssensor kann eine Position des ersten Messobjektes bestimmt werden und der Ventilsteuerungskopf weist eine Befestigung für einen zweiten Positionssensor auf.

EP 3 141 971 A1 betrifft ein Ventilsteuerungsgerät für ein Flüssigkeitsventil. Das Ventilsteuerungsgerät kann zwei Sensoren umfassen, mit denen die Positionen von zwei Ventilen bestimmt werden können.

US 2014/0311600 A1 offenbart ein Doppelsitzventil mit zwei Verschlusselementen, deren Positionen mit entsprechenden Sensoren messbar sind.

US 2004/0211928 A1 betrifft ein Verfahren zur Steuerung des Schaltens von Ventilen. Zum Erfassen der Positionen der Sensoren kommen berührungslose Sensoren zum Einsatz.

Es war daher Aufgabe, eine einfache Anordnung zum berührungslosen Messen der Stellung von wenigstens zwei Schließelementen eines Ventils, insbesondere eines Doppelsitzventils, zu schaffen.

Diese Aufgabe wird von einem Doppelsitzventil mit den Merkmalen des unabhängigen Patentanspruchs 1 gelöst. Vorteilhafte Ausgestaltungen finden sich in den abhängigen Ansprüchen, der Beschreibung und den Figuren.

Das Doppelsitzventil ist ausgestattet mit einem ersten Schließelement, welches mit einem ersten Ventilsitz in dichtenden Kontakt bringbar ist, mit einem zweiten Schließelement, welches mit einem zweiten Ventilsitz in dichtenden Kontakt bringbar ist, einem mit dem ersten Schließelement gekoppelten Sensorobjekt und einer mit dem Sensorobjekt zusammenwirkenden Sensoreinrichtung, welche einen Sensor und eine Auswerteelektronik umfasst. Die Messung der Stellung des zweiten Schließelements erfolgt, indem ein zum Zusammenwirken mit dem Sensorobjekt eingerichteter Manipulator mit dem zweiten Schließelement zusammenwirkt und die Sensoreinrichtung zum Nachweis des Zusammenwirkens des Manipulators mit dem Sensorobjekt eingerichtet ist.

Der Manipulator ist zum Zusammenwirken mit dem Sensorobjekt in Abhängigkeit von einer Stellung des ersten Schließelements und/oder des zweiten Schließelements eingerichtet. Beispielsweise das erste Schließelement kann mit einer Ventilstange verbunden sein. Auch das Sensorobjekt kann mit der Ventilstange gekoppelt sein. Zum Bewegen des ersten Schließelements zwischen seinen Schaltstellungen und damit zum Bewegen des Sensorobjekts kann die Ventilstange in Axialrichtung bewegt werden. Beispielsweise das zweite Schließelement kann mit einer Hohlstange verbunden sein, wobei die Ventilstange das zweite Schließelement und die Hohlstange durchsetzt. Der Manipulator kann mit der Hohlstange zusammenwirken, zum Beispiel mit dieser gekoppelt sein. Eine Verbindung bzw. Kopplung des Sensorobjekts mit der Ventilstange und eine Verbindung bzw. Kopplung des Manipulators mit der Hohlstange kann jeweils direkt oder mittelbar über Verbindungs- bzw. Kopplungselemente erfolgen. Zum Bewegen des zweiten Schließelements zwischen seinen Schaltstellungen kann die Hohlstange in Axialrichtung bewegt werden. Eine (axiale) Bewegung der Schließelemente bewirkt eine Bewegung des Sensorobjekts und des Manipulators. Diese wird durch die Sensoreinrichtung messtechnisch erfasst. Daraus wird auf die jeweilige Stellung der Schließelemente rückgeschlossen. Bei dem ersten Schließelement kann es sich um einen ersten Ventilteller handeln. Bei dem zweiten Schließelement kann es sich entsprechend um einen zweiten Ventilteller handeln. Die axiale Bewegungsrichtung des ersten bzw. zweiten Schließelements bildet eine Hubachse des Ventils.

Die vorgeschlagene Lösung beruht auf der Erkenntnis, dass zur Bestimmung der Stellung des zweiten Schließelements kein mit diesem verbundenes Sensorobjekt notwendig ist und dementsprechend auch kein weiterer Sensor. Vielmehr ist es ausreichend, mit einem Manipulator Eigenschaften des ersten Sensorobjekts zu verändern und diese Veränderung über die Sensoreinrichtung nachzuweisen.

Der Manipulator deckt das Sensorobjekt dabei in Abhängigkeit von der Stellung des ersten Schließelements und/oder des zweiten Schließelements ab, und die Sensoreinrichtung ermittelt den Grad der Abdeckung. Beispielsweise ist denkbar, dass das Sensorobjekt sich entlang des Schaltweges des ersten Schließelements erstreckt und der Manipulator je nach Stellung des zweiten Schließelements das Sensorobjekt wenigstens stückweise oder abschnittsweise abdeckt. Das Abdecken kann an der Außenseite und/oder an der Innenseite des Sensorobjekts erfolgen. Es ist auch möglich, dass der Manipulator das Sensorobjekt im Zuge der Stellung von erstem und/oder zweitem Schließelement zeitweise gar nicht abdeckt, und/oder dass der Manipulator das Sensorobjekt im Zuge der Stellung von erstem und/oder zweitem Schließelement zeitweise vollständig abdeckt. Der Grad der jeweiligen Abdeckung des Sensorobjekts wird durch die Sensoreinrichtung messtechnisch erkannt. Daraus kann auf die Stellung des ersten und/oder zweiten Schließelements geschlossen werden. Insbesondere wird die Erstreckungslänge des Sensorobjekts von der passend gestalteten Sensoreinrichtung ermittelt und eine Veränderung beobachtet. Dies erlaubt den Schluss auf die Schaltstellung insbesondere des zweiten Schließelements.

Gemäß einer besonders praxisgemäßen Ausgestaltung kann die Sensoreinrichtung das Zusammenwirken des Manipulators mit dem Sensorobjekt durch ein magnetisches Messverfahren nachweisen. Denkbar ist es, das Sensorobjekt magnetisch zu gestalten und dann abzuschirmen. Zunächst kann die Sensoreinrichtung die Anwesenheit und die (axiale) Position des Sensorobjekts durch magnetische Wechselwirkung erkennen. Daraus kann auf die Stellung des ersten Schließelements geschlossen werden. Zum Beispiel das Abdecken des Sensorobjekts durch den Manipulator kann die magnetischen Eigenschaften des Sensorobjekts verändern. Diese magnetische Veränderung kann wiederum durch die Sensoreinrichtung erkannt werden. Daraus kann auf die Position des Manipulators in Bezug auf das Sensorobjekt und damit auf die Stellung des zweiten Schließelements geschlossen werden.

Auch denkbar wären andere Messverfahren. Zum Beispiel könnte die Sensoreinrichtung das Zusammenwirken des Manipulators mit dem Sensorobjekt durch ein optisches Messverfahren nachweisen, die Sensoreinrichtung also auf optischem Wirkprinzip beruhend zu gestalten. Das Sensorobjekt besitzt dann optische Eigenschaften, ist beispielsweise als reflektierender Oberflächenabschnitt gestaltet, der bei Änderung der Stellung der Schließelemente stückweise von einem Manipulator abgedeckt wird. Eine solche Verkürzung ist dann mittels der Sensoreinrichtung optisch nachweisbar.

Einen Manipulator einzusetzen erspart es, ein zweites Sensorobjekt einzubauen und Nachweismöglichkeiten für dieses zu schaffen. Die Änderungen an der Sensoreinrichtung sind kostengünstiger als ein weiteres Sensorobjekt, einen weiteren Sensor und dazu gehörende Auswerteelektronik zu schaffen. Zudem können viele Gleichteile in einer Serie aus Einsitz- und Doppelsitzventilen benutzt werden, wodurch Skaleneffekte in der Herstellung ausnutzbar sind. Aufgrund der wenigen notwendigen Bauteile ist das System robust und in der Anwendung zuverlässig. Die Messung der Stellung beider Schließelemente findet an einer Stelle statt, so dass Außenverkabelung zwischen einem Sensor und der Auswerteelektronik entfällt, soweit der Sensor beispielsweise an einer zwischen einem Ventilgehäuse, in dem die Schließelemente angeordnet sind, und einer Verstellvorrichtung, die die Bewegung der Schließelemente bewirkt, angebracht ist.

Besonders ausgeprägt sind die genannten Vorteile bei Verwendung des Messprinzips nach DE 102013018564 A1. Das Sensorobjekt umfasst hier einen elektrischen Schwingkreis. Der Manipulator ist dann vorzugweise die magnetische Flussdichte beeinflussend und in die Spule des Schwingkreises eintauchend ausgeführt, beispielsweise in Form eines Eisenstabes. Der Grad des Eintauchens ist abhängig von der Stellung von erstem und zweitem Schließelement. Die Beeinflussung des Magnetflusses ändert die Eigenschaften des elektrischen Schwingkreises, beispielsweise die Frequenz. Die Sensoreinrichtung kann eine Sendeanordnung mit mindestens einer Sendespule und eine Empfangsanordnung mit mindestens einer Empfangsspule umfassen. Vorzugsweise kann die Empfangsanordnung eine erste und eine zweite Empfangsspule aufweisen. Die Änderung der von der Spule des Schwingkreises ausgesendeten Frequenz führt zu einer geänderten Frequenz in der Empfangsanordnung bzw. Empfangsantenne der Sensoreinrichtung. Die Auswerteelektronik ist eingerichtet, diese Frequenzverschiebung zu erkennen und darauf basierend ein Signal zu erzeugen. Beispielsweise können die Windungen der beiden Empfangsspulen so gelegt sein, dass von dem Sensorobjekt, insbesondere dem Schwingkreis, ausgesandte Wellen phasenversetzt Spannungen in den Empfangsspulen induzieren. Ein Messen der in den Empfangsspulen induzierten Spannungen erlaubt es, die Lage des Sensorobjekts relativ zu dem Messweg und der Empfangsanordnung zu bestimmen. Damit stehen zwei Parameter zur Verfügung, um die Positionen der zwei Schließelemente zu bestimmen, nämlich Lage des Resonators relativ zur Antennenanordnung und Frequenz der vom Resonator ausgesendeten Welle. Diese Lösung ist kostengünstig, baulich einfach, robust und zuverlässig möglich. In einer Baureihe, die Einsitz- und Mehrsitzventile umfasst, kommt als zusätzliches Bauteil bei Doppelsitzventilen lediglich der Manipulator im Doppelsitzventil hinzu.

Die Sensoreinrichtung mit Sensor und Auswerteelektronik kann vollständig in einem anflanschbaren Steuerkopf angeordnet sein, in den ein Abschnitt des ersten Schließelementes oder ein mit diesem Schließelement verbundenes Element hineinragt und das Sensorobjekt trägt. Auf diese Weise wird ein Baukastensystem aus Ventilen mit Stellungsmessung und ohne Stellungsmessung kostengünstig geschaffen. Zudem ist das Nachrüsten erleichtert.

Es kann eine Verstelleinrichtung, beispielsweise auf pneumatischer Wirkweise, vorgesehen sein, um jedes der Schließelemente in Kontakt mit dem jeweils zugeordneten Ventilsitz zu bringen und diesen Kontakt wieder lösen zu können. Die Verstelleinrichtung kann eingerichtet sein, neben einer Offenstellung des Ventils, in welcher beide Schließelemente vom jeweiligen Ventilsitz abgehoben sind, und der Schließstellung des Ventils, in der sich beide Schließelemente in dichtendem Kontakt mit dem jeweiligen Ventilsitz befinden, auch Reinigungsstellungen zu bewirken, in der jeweils eines der beiden Schließelemente vom Ventilsitz abgehoben ist, um diesen reinigen zu können.

Nach einer weiteren Ausgestaltung kann der Manipulator stabförmig ausgebildet sein. Zum Beispiel kann der Manipulator ein Eisenstab sein. Die Längsachse des Stabs ist vorzugsweise entlang der axialen Bewegungsrichtung der Schließelements bzw. einer Ventilstange und Hohlstange ausgerichtet. Der Manipulator kann auch Abschnitte mit unterschiedlichen magnetischen Eigenschaften aufweisen. Diese Ausgestaltung erlaubt eine flexiblere Erkennung der Position des Manipulators und damit des zweiten Schließelements.

Der Manipulator kann mit dem zweiten Schließelement gekoppelt sein, insbesondere starr gekoppelt sein. Dadurch erfolgt eine direkte Umsetzung der Bewegung des zweiten Schließelements in eine Bewegung des Manipulators.

Nach einer weiteren Ausgestaltung kann der Manipulator an einem dem zweiten Schließelement zugewandten Ende mit einem Stift verbunden sein, der mit der Hohlstange verbunden ist, wobei der Stift in Langlöchern der Ventilstange oder eines mit der Ventilstange einerseits und dem Sensorobjekt andererseits gekoppelten Trägers geführt ist. Der Stift kann insbesondere quer zur Axialrichtung der Hohlstange ausgerichtet sein, also einen Querstift bilden. Der Stift ist im Zuge der Bewegung des zweiten Schließelements zwischen seinen Schaltstellungen in Langlöchern der Ventilstange oder eines mit der Ventilstange einerseits und dem Sensorobjekt andererseits gekoppelten Trägers geführt.

Gemäß einer weiteren Ausgestaltung kann zwischen dem Manipulator und dem zweiten Schließelement ein sich bei einer Bewegung des zweiten Schließelements ändernder Abstand bestehen. Diese Ausgestaltung hat mehrere Vorteile. Zum einen wird die axiale Bewegung des zweiten Schließelements bzw. einer mit diesem verbundenen Hohlstange nicht eins zu eins in eine axiale Bewegung des Mitnehmers übertragen, da zunächst der Abstand überwunden werden muss. Dies kann messtechnische Vorteile bieten, insbesondere bei kleineren Bewegungen des zweiten Schließelements, die irrelevant sind und bei einer starren Kopplung ein Messergebnis erzeugen würden. Zum anderen kann auf diese Weise eine Drehentkopplung zwischen dem zweiten Schließelement und dem Manipulator erreicht werden, die abhängig vom Anwendungsfall erwünscht ist. So führt eine Drehung des zweiten Schließelements und gegebenenfalls einer Hohlstange um die Hubachse nicht zu einer mechanischen Beanspruchung des Manipulators bzw. weiterer mit diesem verbundener Komponenten, wie Stift und gegebenenfalls vorhandener Verbindungs- oder Kopplungselemente, wie Mitnehmern oder dergleichen.

Die Hohlstange kann nach einer weiteren Ausgestaltung im Zuge einer Bewegung des zweiten Schließelements den Stift und mit dem Stift den Manipulator in Axialrichtung der Hohlstange drücken. Durch dieses Drücken des Manipulators zum Beispiel in eine Spule des Sensorobjekts hinein können zum Beispiel die magnetischen Eigenschaften des Sensorobjekts verändert werden. Eine Bewegung des Manipulators ist dabei grundsätzlich in beide Richtungen entlang der Hubachse des Ventils möglich, also zum Beispiel in eine Spule des Sensorobjekts hinein oder auch aus dieser heraus. Im ersten Fall kann sich der Manipulator im Ruhezustand zum Beispiel außerhalb der Spule befinden und durch die Hohlstange bzw. den Stift in unterschiedlichem Maße in die Spule hineingedrückt werden. Es wäre aber auch denkbar, dass sich der Manipulator im Ruhezustand in der Spule befindet und durch die Hohlstange bzw. den Stift in unterschiedlichem Maße aus der Spule herausgedrückt wird.

Der Manipulator kann durch ein Vorspannelement, vorzugsweise eine Vorspannfeder, in eine Ruhestellung vorgespannt sein. Zum Beispiel kann der Manipulator in eine dem zweiten Schließelement zugewandte Richtung vorgespannt sein. Ein Vorspannelement, zum Beispiel eine Vorspannfeder dient als Rückstellelement, das den Manipulator bei fehlendem drückenden Kontakt der Hohlstange zurück in eine Ausgangsstellung bewegt. Die Hohlstange drückt den Manipulator also gegen die Vorspannung in Axialrichtung bzw. entlang der Hubachse. Als Vorspannfeder kann eine Druckfeder oder eine Zugfeder zum Einsatz kommen. Alternativ zu einer Vorspannfeder könnte zum Beispiel ein Luftpolster als Rückstellelement vorgesehen sein.

Nach einer weiteren Ausgestaltung kann der Manipulator an dem Sensorobjekt beweglich gelagert sein, vorzugsweise über einen an dem Sensorobjekt beweglich gelagerten Träger. Bei dieser Ausgestaltung bilden der Manipulator, der beispielsweise als Verstimmelement dient, und das Sensorobjekt, das beispielsweise als Resonatortarget dient, eine Baugruppe. Der Manipulator ist an dem Sensorobjekt beweglich angeordnet, beide Elemente sind aber relativ zueinander bewegbar, insbesondere verschiebbar. Die Bewegung bzw. Verschiebung in einer Richtung bei einer Bewegung des zweiten Schließelements kann durch einen als Stößel wirkenden Mitnehmer erfolgen. In der entgegengesetzten Richtung kann wiederum ein eine Vorspannung bereitstellendes Vorspannelement bzw. Rückstellelement, bspw. eine Vorspannfeder vorgesehen sein. Durch Vorsehen eines Trägers kann beispielsweise ein Stößel gegen den Träger drücken anstelle eines direkten Kontakts mit dem Manipulator.

Das Sensorobjekt kann weiterhin einen Deckelabschnitt aufweisen, an dem sich das Vorspannelement abstützt. Der Deckelabschnitt kann mindestens einen Durchlass besitzen. Auch ein Träger kann mindestens einen Durchlass besitzen. Mittels solcher Durchlässe kann eine Luftführung für einen Druckausgleich sichergestellt werden. Auch denkbar wäre es zum Beispiel, einen Stößel als Rohr auszuführen.

Nach einer weiteren Ausgestaltung kann die Hohlstange im Zuge einer Bewegung des zweiten Schließelements den Manipulator in Axialrichtung der Hohlstange drücken, vorzugsweise über einen mit der Hohlstange verbundenen Stößel. Für die Bewegung des Manipulators gilt das oben bereits Gesagte. Insbesondere sind beide Bewegungsrichtungen entlang der Hubachse des Ventils möglich, also beispielsweise in eine Spule des Sensorobjekts hinein oder aus dieser heraus.

Der sich bei einer Bewegung des zweiten Schließelements ändernde Abstand zwischen dem Manipulator und dem zweiten Schließelement kann mit einem kompressiblen Material gefüllt sein, das vorzugsweise lediglich an dem Manipulator befestigt ist. Der variable Abstand und die damit verbundenen oben erläuterten Vorteile können mit dieser Ausgestaltung beibehalten werden. Gleichzeitig kann in vorteilhafter Weise eine Dämpfung des Kontakts zwischen den beteiligten Komponenten des zweiten Schließelements bzw. der Hohlstange einerseits und des Manipulators andererseits sichergestellt werden. Auch kann das kompressible Material als Rückstellelement zum Bewegen des Manipulators in seine Ruhestellung zum Einsatz kommen.

Anhand von Ausführungsbeispielen sollen die Einzelheiten der Erfindung näher erläutert und die Darstellung ihrer Vorteile vertieft werden.

Es zeigen:
- **Fig. 1:**: Schematische Darstellung eines Doppelsitzventils;
- **Fig. 2:**: Schematische Darstellung einer Sensoreinrichtung mit Antennenanordnung und Auswerteelektronik;
- **Fig. 3:**: Schematische Darstellung verschiedener Stellungen der Schließelemente; a) Schließstellung des Ventils, b) Offenstellung des Ventils, c) Reinigungsstellung des ersten Schließelements, d) Reinigungsstellung des zweiten Schließelements, e) gleichzeitige Reinigungsstellung beider Schließelemente;
- **Fig. 4**: Schematische Darstellung eines Teils eines Doppelsitzventils nach einem weiteren Ausführungsbeispiels;
- **Fig. 5**: Schematische Darstellung eines Teils eines Doppelsitzventils nach einem weiteren Ausführungsbeispiels.

Gleiche Bezugszeichen bezeichnen in den Figuren gleiche oder funktionsgleiche Bauteile.

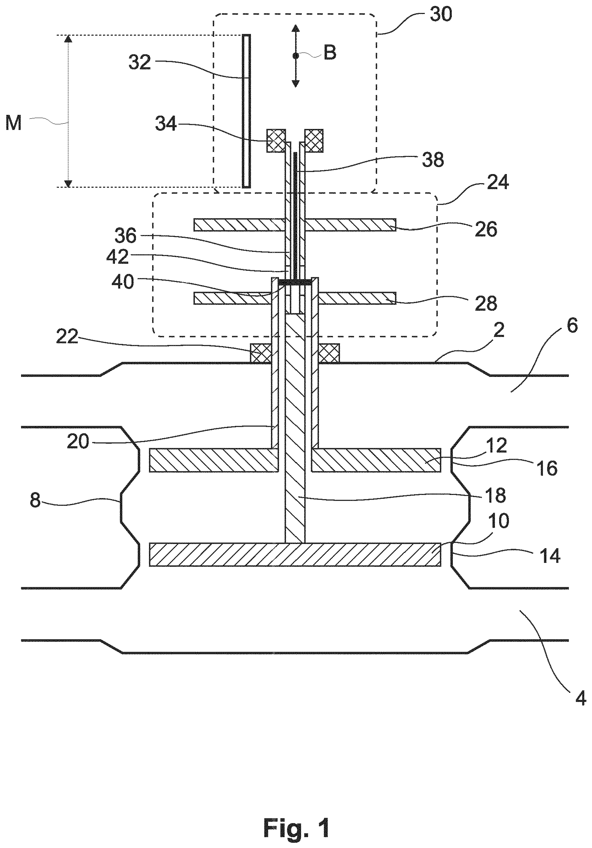

In Fig. 1 ist ein Doppelsitzventil schematisch dargestellt.

Das Doppelsitzventil umfasst ein Gehäuse 2 und besitzt einen ersten Anschluss 4 und einen zweiten Anschluss 6. Die Anschlüsse 4 und 6 sind mittels eines Durchlasses 8 fluidverbunden. Die Fluidverbindung ist schaltbar ausgeführt. Dazu sind ein erstes Schließelement 10 und ein zweites Schließelement 12 vorgesehen. Das erste Schließelement 10 ist mit einem ersten Ventilsitz 14 und das zweite Schließelement 12 mit einem zweiten Ventilsitz 16 in dichtenden Kontakt bringbar. Ventilsitze 14 und 16 und/oder Schließelemente 10 und 12 können dazu geeignete Dichtungsmittel aufweisen, beispielsweise Dichtungsringe. Die Dichtungsanordnungen können radial, halbaxial oder axial ausgeführt sein.

Die dichtende Stellung der Schließelemente 10 und 12 kann durch unabhängige oder gekoppelte Bewegung der Schließelemente 10 und 12 entlang einer Bewegungsrichtung B erreicht werden. Um die Bewegung bewirken zu können, ist das erste Schließelement 10 mit einer Ventilstange 18 verbunden. Diese durchsetzt das zweite Schließelement 12 und eine Hohlstange 20, welche an dem zweiten Schließelement 12 angebracht ist. Die Hohlstange 20 ist aus dem Gehäuse 2 des Ventils bewegbar herausgeführt. Hierzu ist eine Gehäusedurchführung 22 vorgesehen, die die Führung der Hohlstange 20 und eine Abdichtung bewirkt.

Die Bewegung von Ventilstange 18 und Hohlstange 20 wird im gezeigten Beispiel von einer schematisch dargestellten Verstelleinrichtung 24 erzeugt, die vorzugsweise druckmittelbetrieben, insbesondere pneumatisch, ausgeführt ist. Die Verstelleinrichtung 24 umfasst dazu einen ersten Kolben 26 und einen zweiten Kolben 28. Der erste Kolben 26 bewirkt die Bewegung der Ventilstange 18, während der zweite Kolben 28 mit der Hohlstange 20 verbunden ist und darüber eine Bewegung des zweiten Kolbens 12 bewirkt.

Auf einer dem Gehäuse 2 abgewandten Seite der Verstelleinrichtung 24 ist ein Steuerkopf 30 lösbar an der Verstelleinrichtung 24 befestigt, beispielsweise mittels einer Flanschverbindung.

In dem Steuerkopf 30 befindet sich eine Antennenanordnung 32, die sich entlang der Bewegungsrichtung B erstreckt und durch diese Erstreckung einen Messweg M erzeugt. Ein Sensorobjekt 34 ist entlang des Messweges M bewegbar angeordnet und mit dem ersten Schließelement 10 gekoppelt. Durch die Kopplung wird die Bewegung des ersten Schließelements 10 direkt in eine repräsentative Bewegung des Sensorobjekts 34 entlang des Messweges M übertragen. Die Kopplung ist vorzugsweise starr mit einem Träger 36 ausgeführt, der beispielsweise als Hohlstange ausgeführt ist, die mit der Ventilstange 18 verbunden ist. Der Träger 36 kann den ersten Kolben 26 tragend ausgeführt sein oder mit einem Stangenabschnitt verbunden sein, der den ersten Kolben 26 der Verstelleinrichtung 24 trägt.

Das Sensorobjekt 34 ist eingerichtet, mit der Antennenordnung 32 zusammenzuwirken. Vorzugsweise ist es eingerichtet, ein elektromagnetisches Signal zu empfangen und in Antwort darauf ein elektromagnetisches Signal auszusenden.

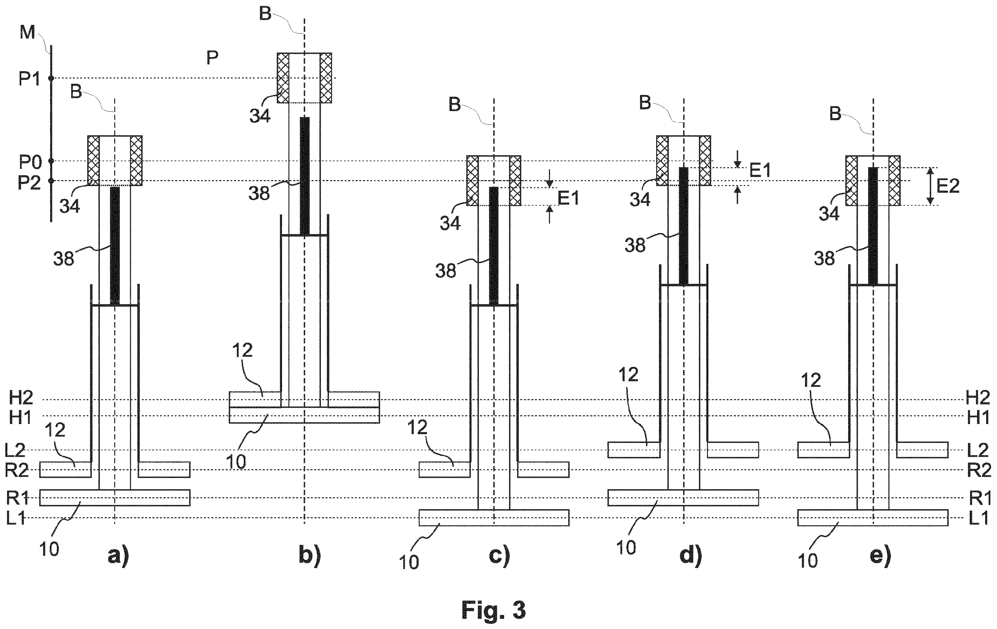

In den Steuerkopf 30 ragt bis auf Höhe des Messweges M ein Manipulator 38. Der Manipulator 38 ist in einem Inneren des Trägers 36 aufgenommen und mit einem Stift 40 verbunden, der Langlöcher 42 durchsetzt, welche im Träger 36 ausgeformt sind. Der Stift 40 ist seinerseits mit der Hohlstange 20 verbunden. Eine durch den zweiten Kolben 28 bewirkte Bewegung der Hohlstange 20 entlang der Bewegungsrichtung B wird auf diese Weise sowohl in eine Bewegung des zweiten Schließelements 12 als auch in eine Bewegung des Manipulators 38 umgesetzt. Der Manipulator 38 ist so bemessen, dass er abhängig von der Stellung der Schließelemente 10 und 12 in das Sensorobjekt 34 wenigstens abschnittsweise eintaucht und dessen Wirkung verändert. Die Abhängigkeit von der Stellung der Schließelemente 10 und 12 wird anhand Fig. 3 noch näher erläutert werden.

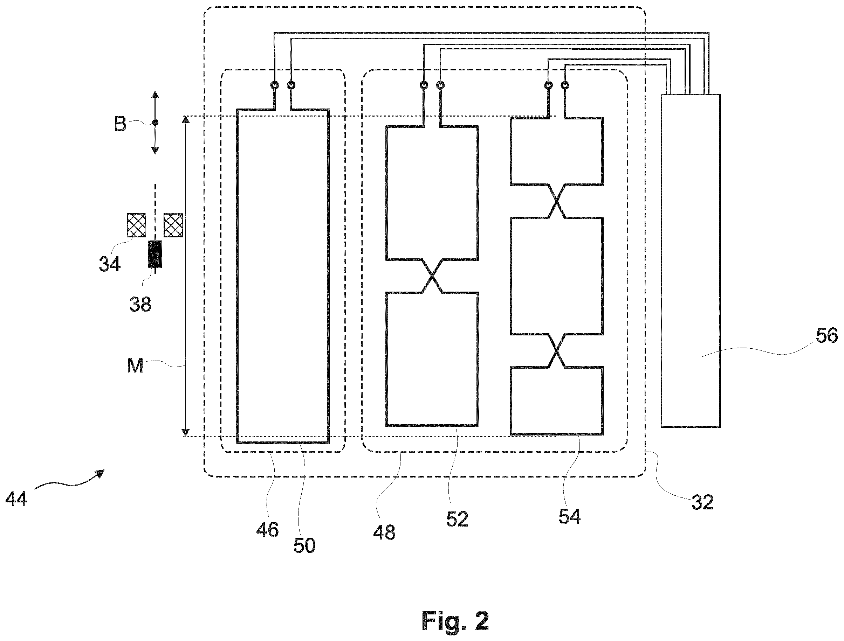

Eine schematische Darstellung der Antennenanordnung 32, welche ein Teil einer Sensoreinrichtung 44 ist, ist in der Fig. 2 gezeigt. Die Antennenanordnung 32 umfasst eine Sendeanordnung 46 und eine Empfangsanordnung 48. Beide Anordnungen 46 und 48 erstrecken sich über den Messweg M.

Die Sendeanordnung 46 kann eine Sendespule 50 umfassen, die eine oder eine Mehrzahl an Windungen besitzt und so ausgerichtet ist, dass der gesamte Messweg M von einem ausgesendeten Signal abdeckbar ist.

Die Empfangsanordnung 48 kann eine erste Empfangsspule 52 und eine zweite Empfangsspule 54 aufweisen. Die Windungen der Empfangsspulen 52 und 54 sind so gelegt, dass von dem Sensorobjekt 34 ausgesandte Wellen phasenversetzt Spannungen in den Empfangsspulen 52 und 54 induzieren. Ein Messen der in den Empfangsspulen 52 und 54 induzierten Spannungen erlaubt es, die Lage des Sensorobjekts 34 relativ zum Messweg M und der Empfangsanordnung 48 zu bestimmen.

Eine Auswerteelektronik 56 ist mit der Sendeanordnung 46 und der Empfangsanordnung 48 verbunden. Sie ist dazu eingerichtet, die Sendespule 50 zu bestromen, so dass diese eine elektromagnetische Welle erzeugt. Weiterhin ist die Auswerteelektronik 56 dazu eingerichtet, die in den Empfangsspulen 52 und 54 durch das Sensorobjekt 34 induzierten Spannungen zu bestimmen und daraus die Lage des Sensorobjekts 34 relativ zum Messweg M abzuleiten.

Das Sensorobjekt 34 umfasst eine Resonatorspule, die zusammen mit einer am Sensorobjekt 34 vorgesehenen Kapazität einen elektrischen Schwingkreis bildet. Diese Komponenten können in einem Verguss eingegossen und dadurch mechanisch stabilisiert und vor Umwelteinflüssen geschützt sein. Eine elektromagnetische Welle, die von der Sendeanordnung 46 ausgesandt wird, regt den elektrischen Schwingkreis an, wodurch eine Resonanzwelle entsteht. Die Resonatorspule ist ringartig und zur wenigstens abschnittsweisen Aufnahme des Manipulators 38 gestaltet und rotationssymmetrisch zur Bewegungsrichtung B ausgerichtet. Die Windungen, auch Leiterschleifen genannt, der Spule sind daher um die Bewegungsrichtung B gewickelt. Besonders ausgeprägt ist die Wirkung des Manipulators 38 auf die Resonatorspule, wenn der Manipulator 38 wenigstens teilweise in den Ring der Resonatorspule abhängig von der Stellung der Schließelemente 10 und 12 eintaucht.

Der Aufbau des Sensorobjekts 34 und der Antennenanordnung 32 kann nach DE 102013018564 A1 ausgeführt sein.

In Fig. 3 sind die verschiedenen Stellungen von erstem und zweitem Schließglied 10 und 12 und die dadurch aufgrund der Kopplung bedingten Stellungen von Sensorobjekt 34 und Manipulator 38 schematisch dargestellt. Diese Darstellung verdeutlicht das Wirkprinzip des beanspruchten Gegenstandes.

Mit der beschriebenen Anordnung sind zwei Parameter erfassbar. Ein Parameter ist die Position des Sensorobjekts 34 als Ausgangspunkt einer Resonanzwelle entlang des Messweges M. Ein zweiter Parameter ist die Frequenzverschiebung der Resonanzwelle, die durch das Eintauchen des Manipulators in die Resonanzspule entsteht. Es stehen daher Positionsmessung und Frequenzverschiebung als zwei Messgrößen zur Verfügung, die von den zwei Stellungen der Schließelemente 10 und 12 abhängen und daher auf diese Stellungen schließen lassen.

Für das Beispiel wurde die nachfolgend beschriebene Dimensionierung gewählt, anhand derer der Fachmann Abwandlungen vornehmen kann.

Die Fig. 3 a) zeigt die Ruhestellung des Ventils. In diesem Beispiel ist das die Schließstellung des Doppelsitzventils. In dieser befinden sich die Schließelemente 10 und 12 jeweils in dichtendem Kontakt mit den jeweils zugeordneten Ventilsitzen 14 und 16. Das erste Schließelement 10 befindet sich in der Ruhelage R1, das zweite Schließelement 12 befindet sich in der Ruhelage R2, das Sensorobjekt 34 auf dem Messweg M an der Position P0. Der Manipulator 38 taucht noch nicht in das Sensorobjekt 34 und dessen Resonatorspule ein. Die Empfangsanordnung 48 empfängt eine Resonanzwelle mit einer ersten Frequenz.

In Fig. 3 b) befinden sich die Schließelemente 10 und 12 in einer Offenstellung des Ventils. Die Schließelemente 10 und 12 sind dazu von den zugeordneten Ventilsitzen 14 und 16 abgehoben und in eine Stellung H1 und H2 gebracht, wodurch eine Fluidströmung durch den Durchlass 8 freigegeben ist. Das Sensorobjekt 34 befindet sich an einer Position P1 entlang des Messweges M. Der Manipulator 38 steht in einem Abstand zum Sensorobjekt 34.

Eine Reinigungsstellung des ersten Schließelements 10 ist in Fig. 3 c) gezeigt. Das erste Schließelement 10 ist auf eine Position L1 verstellt, in der ein Reinigungsspalt zwischen erstem Schließelement 10 und erstem Ventilsitz 14 besteht. Das zweite Schließelement 12 befindet sich weiterhin in Position R2 und dichtendem Kontakt mit zweitem Ventilsitz 16. Die Bewegung des ersten Schließelements 10 von der Stellung R1 auf L1 ist so, dass der Abstand zwischen den Schließelementen 10 und 12 zunimmt. Das führt dazu, dass das Sensorobjekt eine Position P2 am Messweg M einnimmt, die auf einer der Position P1 gegenüberliegenden Seite der Position P0 liegt. Der Manipulator 38 taucht mit der Eintauchtiefe E1 in das Sensorobjekt 34 und dessen Spule ein, wodurch eine erste Frequenzänderung bewirkt wird. Der elektrische Schwingkreis schwingt mit einer zweiten Frequenz, die von der ersten Frequenz verschieden ist.

In Fig. 3 d) ist eine Reinigungsstellung des zweiten Schließelements 12 gezeigt. Dieses ist aus der Ruhelage R2 in die Lage L2 gebracht. Zwischen dem zweiten Schließelement 12 und dem zweiten Ventilsitz 16 ist ein Reinigungsspalt ausgebildet. Das erste Schließelement 10 bleibt in der Position R1 und in dichtendem Kontakt mit dem ersten Ventilsitz 14. Das Sensorobjekt 34 befindet sich daher auf Position P0, der Manipulator taucht um die Eintauchtiefe E1 in das Sensorobjekt 34 ein, was erneut zu einer Frequenzänderung der Resonanzwelle führt. Im gezeigten Beispiel sind die Eintauchtiefen des Manipulators in den beiden Stellungen nach Fig. 3 c) und Fig. 3 d) gleich groß. Das ist zwar vorteilhaft, um gleiche Reinigungswirkung zu erzielen, ist aber nicht zwingend notwendig.

In Fig. 3 e) ist schließlich eine Ventilstellung gezeigt, in der sich beide Schließelemente 10 und 12 in ihrer jeweiligen Reinigungsstellung befinden. Für das Ventil dieses Beispiels kann diese Stellung eine Fehlfunktion darstellen, die vorteilhaft nachweisbar ist. Diese Stellung kann jedoch abhängig vom Zustand der Prozessanlage auch zum Reinigen des Ventils genutzt werden. Die Prozesssteuerung muss dann vermeiden, dass Produkt an das Ventil herangeführt wird. In dieser sind beide Schließelemente 10 und 12 von den zugeordneten Ventilsitzen 14 und 16 abgehoben und bilden jeweils einen Reinigungsspalt aus. Da die Schließelemente 10 und 12 eine gegenläufige Bewegung auf die Lagen L1 und L2 ausführen und den größten Abstand zueinander aufweisen, taucht der Manipulator um einen größeren Wert E2 der Eintauchtiefe in das Sensorobjekt 34 ein. Hieraus ergibt sich die größte Frequenzverschiebung der gezeigten Stellungen der Schließelemente 10 und 12, die Resonanzwelle besitzt eine dritte Frequenz.

Die Auswertung der Stellungen der Schließelemente 10 und 12 ist einfach. Die Stellungen nach Fig. 3 a) und Fig. 3 b) unterscheiden sich durch die Position des Sensorobjekts 34 und sind eindeutig feststellbar. Die Stellungen nach Fig. 3 c) und Fig. 3 d) haben gegenüber den Stellungen nach Fig 3. a) und Fig. 3 b) eine nachweisbare Frequenzverschiebung und unterscheiden sich untereinander durch die Positionen P0 und P2 des Sensorobjekts 34. Die Stellung nach Fig. 3 e) besitzt zwar die gleiche Position P2 des Sensorobjekts 34 wie die Stellung nach Fig. 3 c), unterscheidet sich von dieser aber wiederum durch die stärkere Frequenzverschiebung aufgrund der Eintauchtiefe E2, die größer als die Eintauchtiefe E1 ist.

Der Manipulator 38 ist gemäß dieser Funktionsbeschreibung gestaltet, insbesondere um eine messtechnisch mit der Antennenanordnung 32 und Auswerteelektronik 56 nachweisbare Frequenzverschiebung zu bewirken. Dies betrifft beispielsweise die Wahl des Materials, das sich beispielsweise an bekannte Spulenkerne aus ferromagnetischen Substanzen anlehnt. Die Materialeigenschaften können sich über eine Ausdehnung des Manipulators entlang der Bewegungsrichtung B ändern, beispielsweise der Ferromagnetismus unterschiedlich stark ausgeprägt sein. Damit können die durch die beiden unterschiedlichen Eintauchtiefen E1 und E2 erzeugten Frequenzunterschiede verstärkt werden.

Die Kopplung des Sensorobjekts 34 an das erste Schließelement 10 und die Kopplung des Manipulators 38 an das zweite Schließelement 12 können mehrteilig ausgeführt sein, um die Montierbarkeit der Anordnung zu erleichtern. Die Kopplung muss mechanisch stabil sein und darf durch die Bewegung der Schließelemente 10 und 12 nicht gelöst werden.

Wie gezeigt ist dieser Aufbau geeignet, mit einer einzelnen Messanordnung, der Empfangsanordnung 48, und einem Sensorobjekt 34 die Position beider Schließelemente 10 und 12 zu bestimmen. Aufwändige Messanordnungen mit mehreren Sensoren entfallen, ein zusätzliches Sensorobjekt ist ebenfalls unnötig.

In dem hier vorgestellten Beispiel bewegen sich die Schließelemente 10 und 12 des Ventils aus der jeweiligen Ruhestellung R1 und R2 in entgegengesetzte Richtung in die jeweilige Reinigungsstellung L1 und L2. Es kann vorteilhaft sein, das Ventil in einer Abwandlung so auszuführen, dass diese Bewegung in gleicher Richtung verläuft, nicht in gegengesetzter Richtung. In diesem Fall entspricht die Stellung nach Fig 3c) beispielsweise der Ruhelage. Fig. 3a) ist dann die Reinigungsstellung des ersten Schließelements 10. Fig. 3e) zeigt dann die Reinigungsstellung des zweiten Schließelements 12.

Im gezeigten Beispiel findet der Haupthub statt, indem sich die Schließelemente 10 und 12 in Richtung der Verstelleinrichtung 24 bewegen. In einer Abwandlung findet der Haupthub in einer dazu entgegengesetzten Richtung statt, in Fig. 3 liegen die Hubpositionen H1 und H2 dann unterhalb von L1. Um diese Stellungen messen zu können muss der Messweg M entsprechend über P2 in Richtung der Schließelemente 10 und 12 verlängert werden.

Gemäß einer anderen Weiterbildung wird eine Abwandlung des Manipulators 38 vorgeschlagen. Dieser besitzt an einem dem Schließelement 12 abgewandten Ende eine Verlängerung mit einem magnetisch neutralen Material, welche ausgeführt ist, das Sensorobjekt 34 vollständig in Richtung der Bewegungsrichtung B zu durchsetzen. An dieser Verlängerung ist ein zweiter Manipulator angebracht. Verlängerung und zweiter Manipulator sind insbesondere so ausgeführt, dass sich der zweite Manipulator in der Stellung gemäß Fig 3a) auf einer den Schließelementen 10 und 12 abgewandten Seite außerhalb des Sensorobjekts 34 befindet, in der Stellung nach Fig. 3b) jedoch in das Sensorobjekt 34 eintaucht oder vollständig darin befindet und so die Eigenschaft des Sensorobjekts 34 verändert. Hierdurch wird die in der Empfangsanordnung 48 empfangene Resonanzwelle ebenfalls geändert. Die Auswerteelektronik 56 ist eingerichtet, diese Änderung zu erkennen und ein Signal auszugeben. Mit dieser beschriebenen Abwandlung ist es möglich, ein Auseinanderfahren der Schließelemente 10 und 12 in der Offenstellung gemäß Fig. 3b) zu erkennen. Beim Auseinanderfahren kommen Manipulatoren und Sensorobjekt 34 in eine Lage relativ zueinander wie in Fig. 3a). Der Ursprung der Resonanzwelle liegt jedoch nahe P1, was einen nachweisbaren Unterschied zur Soll-Stellung ergibt, in der der zweite Manipulator innerhalb des Sensorobjekts nahe Position P1 ist. Der Nachweis des Auseinanderfahrens kann wünschenswert sein, wenn durch dieses Auseinanderfahren ein Leckageauslass geöffnet wird, der in dieser Stellung eigentlich geschlossen sein sollte. Das Ventil ist in dieser Abwandlung daher in der Fehlererkennung verbessert.

In einer weiteren Abwandlung wird das Prinzip des zweiten Manipulators aufgegriffen, jedoch auf den ersten Manipulator verzichtet. Ein magnetisch neutrales Verbindungselement wird dann vom zweiten Schließelement zum Sensorobjekt geführt. An einem dem zweiten Schließelement abgewandten Ende ist dann ein Manipulator mit den oben beschriebenen Wirkungen angeordnet. Vorzugsweise taucht der Manipulator in der Stellung nach Fig. 3a) mit einer ersten Eintauchtiefe in das Sensorobjekt 34 ein. Er erstreckt sich entlang der Bewegungsrichtung B so, dass er in der Stellung nach Fig. 3b) über eine längere Strecke in das Sensorobjekt 34 eintaucht als in der Stellung gemäß Fig. 3a) und dadurch die Eigenschaften des Resonators in stärkerem und nachweisbarem Maße verändert. Die Länge des Manipulators kann so gewählt werden, dass auch die weiteren Stellungen nach Fig. 3 c) bis Fig. 3 e) nachweisbar sind.

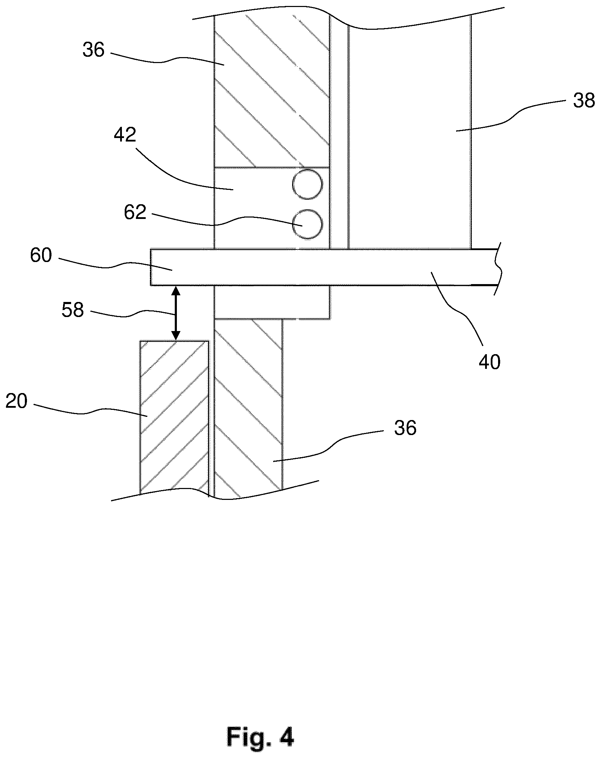

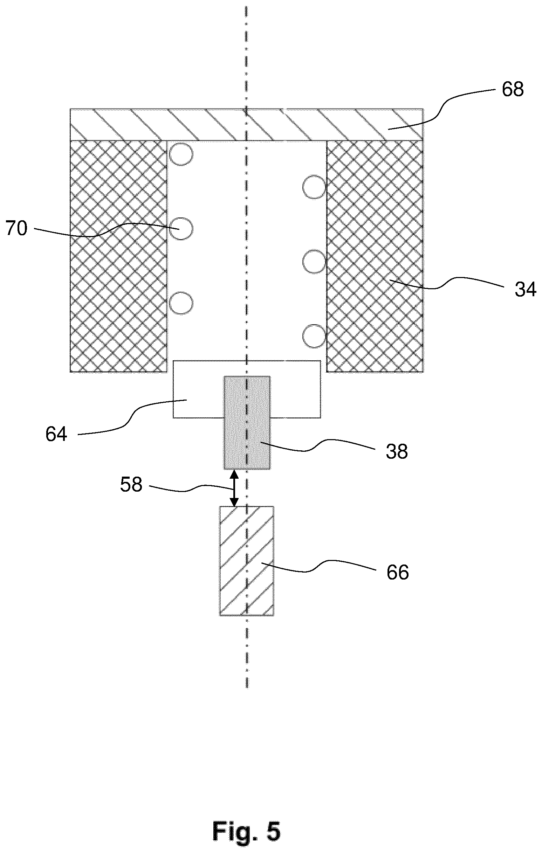

Anhand der Figuren 4 und 5 sollen weitere Ausführungsbeispiele der Erfindung erläutert werden.

In Figur 4 ist ein erfindungsgemäßes Doppelsitzventil ausschnittsweise dargestellt. Das Doppelsitzventil entspricht weitgehend dem Doppelsitzventil nach Figur 1. Es unterscheidet sich von diesem im Wesentlichen dadurch, dass bei dem Ausführungsbeispiel nach Figur 4 zwischen dem Manipulator 38 und dem zweiten Schließelement 12 ein sich bei einer Bewegung des zweiten Schließelements 12 ändernder Abstand 58 besteht. Im gezeigten Beispiel besteht dieser Abstand 58 zwischen der Hohlstange 20 und einem äußeren Ende 60 des Stifts 40, der in Langlöchern 42 des mit der Ventilstange 18 verbundenen Trägers 36 geführt ist. Der Stift 40 ist wiederum mit dem Manipulator 38 verbunden. Eine Vorspannfeder 62 stützt sich einerseits an einer die Langlöcher 42 begrenzenden Wand und andererseits an dem Stift 40 ab und spannt den Stift 40 und mit ihm den Manipulator 38 in die in Figur 4 gezeigte Ruhestellung vor. Bei einem Abheben des zweiten Schließelements 12 von dem Ventilsitz 16, in Figur 4 also nach oben, wird zunächst der Abstand 58 zwischen der Hohlstange 20 und dem äußeren Ende 60 des Stifts 40 bis zu einem Kontakt geschlossen. Bei einer weiteren Bewegung des Schließelements 12 drückt die Hohlstange 20 den Stift 40 und mit ihm den Manipulator 38 gegen die Vorspannung und unter Komprimierung der Vorspannfeder 62 in Figur 4 nach oben, so dass der Manipulator 38 in die Spule des Sensorobjekts 34 eintritt, wie dies oben insbesondere zu Figur 3 erläutert wurde. Die Vorspannfeder 62 stellt den Stift 40 und damit den Manipulator 38 bei Zurückbewegen des Schließelements 12 in Figur 4 nach unten zurück in die Ruhestellung. Die in Figur 4 gezeigte Stellung entspricht dabei der in Figur 3a gezeigten Stellung. Es ist auch möglich, dass der Stift 40 über einen Mitnehmer mit dem Manipulator 38 verbunden ist anstelle einer direkten Verbindung des Stifts 40 mit dem Manipulator 38.

In Figur 5 ist ein weiteres Ausführungsbeispiel eines erfindungsgemäßen Doppelsitzventils ausschnittsweise dargestellt. Auch dieses Doppelsitzventil entspricht weitgehend dem Doppelsitzventil nach Figur 1. Es unterscheidet sich von diesem im Wesentlichen dadurch, dass der Manipulator 38 und das Sensorobjekt 34 eine gemeinsame Baugruppe bilden, wobei der Manipulator 38 über einen Träger 64 beweglich an dem Sensorobjekt 34 gelagert ist. Dazu ist der Manipulator 38 mit dem Träger 64 verbunden, der wiederum beweglich an dem Sensorobjekt 34 gelagert ist. Zwischen einem mit der Hohlstange 20 verbundenen Stößel 66 und dem Manipulator 38 besteht wie bei dem Ausführungsbeispiel nach Figur 4 ein sich bei einer Bewegung des zweiten Schließelements 12 und damit einer Bewegung der Hohlstange 20 ändernder Abstand 58 besteht. Das Sensorobjekt 34 weist außerdem einen Deckelabschnitt 68 auf, an dem sich eine Vorspannfeder 70 abstützt, die den Träger 64 und mit ihm den Manipulator 38 in die in Figur 5 gezeigte Ruhestellung vorspannt. Bei einem Abheben des zweiten Schließelements 12 von dem Ventilsitz 16, in Figur 5 also nach oben, und einer entsprechenden Bewegung der Hohlstange 20 wird zunächst der Abstand 58 zwischen dem Stößel 66 und dem Manipulator 38 bis zu einem Kontakt geschlossen. Bei einer weiteren Bewegung des Schließelements 12 und der Hohlstange 20 drückt der Stößel 66 den Manipulator 38 und mit ihm den Träger 64 gegen die Vorspannung und unter Komprimierung der Vorspannfeder 70 in Figur 5 nach oben, so dass der Manipulator 38 in die Spule des Sensorobjekts 34 eintritt, wie dies oben insbesondere zu Figur 3 erläutert wurde. Die Vorspannfeder 70 stellt den Träger 64 und damit den Manipulator 38 bei Zurückbewegen des Schließelements 12 in Figur 5 nach unten zurück in die Ruhestellung. Die in Figur 5 gezeigte Stellung entspricht dabei der in Figur 3a gezeigten Stellung.

Der Stößel 66 kann dabei an seinem in Figur 5 nicht weiter dargestellten unteren Ende mit dem Stift 40 verbunden sein. Es wäre aber auch eine Ausgestaltung denkbar, bei der der Stößel 66 mit dem Manipulator 38 verbunden ist bzw. diese einteilig ausgebildet sind. Der Stößel 66 wäre dann nicht mit dem Stift 40 verbunden, sondern würde einen veränderlichen Abstand zu diesem aufweisen und von diesem nur durch Drücken bewegt werden. Die Ausführungsbeispiele nach den Figuren 4 und 5 könnten auch kombiniert sein, derart dass das untere Ende des Stößels 66 gemäß Figur 5 mit dem Stift 40 verbunden ist, der dann einen veränderlichen Abstand zur Hohlstange 20 aufweist, wie in Figur 4 gezeigt.

Es versteht sich, dass in den Figuren 4 und 5 jeweils nur ein Teil des Doppelsitzventils dargestellt ist. Die weiteren Komponenten können grundsätzlich ausgestaltet sein wie in den Figuren 1 und 2 dargestellt und oben erläutert.

Im Grundsatz ist es auch möglich, die Erfindung dahingehend zu verändern, dass die Verstimmung des Resonators des Sensorobjekts 34 durch Entfernen des Manipulators aus der Spule in den verschiedenen Schaltstellungen in unterschiedlichem Maß stattfindet, also von einem verstimmten Resonator als Grundstellung ausgegangen wird.

### Bezugszeichenliste

- 2: Gehäuse
- 4: erster Anschluss
- 6: zweiter Anschluss
- 8: Durchlass
- 10: erstes Schließelement
- 12: zweites Schließelement
- 14: erster Ventilsitz
- 16: zweiter Ventilsitz
- 18: Ventilstange
- 20: Hohlstange
- 22: Gehäusedurchführung
- 24: Verstelleinrichtung
- 26: erster Kolben
- 28: zweiter Kolben
- 30: Steuerkopf
- 32: Antennenanordnung
- 34: Sensorobjekt
- 36: Träger
- 38: Manipulator
- 40: Stift
- 42: Langlöcher
- 44: Sensoreinrichtung
- 46: Sendeanordnung
- 48: Empfangsanordnung
- 50: Sendespule
- 52: erster Empfangsspule
- 54: zweite Empfangsspule
- 56: Auswerteelektronik
- 58: Abstand
- 60: Äußeres Ende des Stifts 40
- 62: Vorspannfeder
- 64: Träger
- 66: Stößel
- 68: Deckelabschnitt
- 70: Vorspannfeder

- M: Messweg
- B: Bewegungsrichtung
- R1: Ruhestellung erstes Schließelement
- R2: Ruhestellung zweites Schließelement
- L1: Reinigungsstellung erstes Schließelement
- L2: Reinigungsstellung zweites Schließtelement
- P0: Position
- P1: Position
- P2: Position
- E1: Eintauchtiefe
- E2: Eintauchtiefe
- H1: Hubposition erstes Schließelement
- H2: Hubposition zweites Schließelement

## Patentansprüche

1. Doppelsitzventil mit einem ersten Schließelement (10), welches mit einem ersten Ventilsitz (14) in dichtenden Kontakt bringbar ist, mit einem zweiten Schließelement (12), welches mit einem zweiten Ventilsitz (16) in dichtenden Kontakt bringbar ist, einem mit dem ersten Schließelement (10) gekoppelten Sensorobjekt (34) und einer mit dem Sensorobjekt (34) zusammenwirkenden Sensoreinrichtung (44), welche einen Sensor (46, 48) und eine Auswerteelektronik (56) umfasst, wobei ein zum Zusammenwirken mit dem Sensorobjekt (34) eingerichteter Manipulator (38) mit dem zweiten Schließelement (12) zusammenwirkt, und wobei die Sensoreinrichtung (44) zum Nachweis des Zusammenwirkens des Manipulators (38) mit dem Sensorobjekt (34) eingerichtet ist, **dadurch gekennzeichnet, dass** der Manipulator (38) das Sensorobjekt (34) in Abhängigkeit von der Stellung des ersten Schließelements (10) und/oder des zweiten Schließelements (12) abdeckt, und dass die Sensoreinrichtung (44) den Grad der Abdeckung ermittelt.

2. Doppelsitzventil nach Anspruch 1, **dadurch gekennzeichnet, dass** die Sensoreinrichtung (44) das Zusammenwirken des Manipulators (38) mit dem Sensorobjekt (34) durch ein magnetisches Messverfahren nachweist.

3. Doppelsitzventil nach Anspruch 2, **dadurch gekennzeichnet, dass** das Sensorobjekt (34) einen elektrischen Schwingkreis umfasst, und dass der Manipulator (38) in Abhängigkeit von einer Stellung des ersten Schließelements (10) und/oder des zweiten Schließelements (12) die magnetische Flussdichte beeinflussend in eine Spule des elektrischen Schwingkreises eintaucht.

4. Doppelsitzventil nach Anspruch 3, **dadurch gekennzeichnet, dass** der Manipulator (38) stabförmig ausgebildet ist.

5. Doppelsitzventil nach einem der Ansprüche 3 oder 4, **dadurch gekennzeichnet, dass** der Manipulator (38) Abschnitte mit unterschiedlichen magnetischen Eigenschaften aufweist.

6. Doppelsitzventil nach einem der vorhergehenden Ansprüche, **dadurch gekennzeichnet, dass** das Sensorobjekt (34) mit einer mit dem ersten Schließelement (10) verbundenen Ventilstange (18) gekoppelt ist.

7. Doppelsitzventil nach Anspruch 6, **dadurch gekennzeichnet, dass** das zweite Schließelement (12) mit einer Hohlstange (20) verbunden ist, und dass die Ventilstange (18) das zweite Schließelement (12) und die Hohlstange (20) durchsetzt.

8. Doppelsitzventil nach einem der vorhergehenden Ansprüche, **dadurch gekennzeichnet, dass** der Manipulator (38) mit dem zweiten Schließelement (12) gekoppelt ist.

9. Doppelsitzventil nach den Ansprüchen 7 und 8, **dadurch gekennzeichnet, dass** der Manipulator (38) an einem dem zweiten Schließelement (12) zugewandten Ende mit einem Stift (40) verbunden ist, der mit der Hohlstange (20) verbunden ist, wobei der Stift (40) in Langlöchern (42) der Ventilstange (18) oder eines mit der Ventilstange (18) einerseits und dem Sensorobjekt (34) andererseits gekoppelten Trägers (36) geführt ist.

10. Doppelsitzventil nach einem der Ansprüche 1 bis 7, **dadurch gekennzeichnet, dass** zwischen dem Manipulator (38) und dem zweiten Schließelement (12) ein sich bei einer Bewegung des zweiten Schließelements (12) ändernder Abstand (58) besteht.

11. Doppelsitzventil nach den Ansprüchen 7, 9 und 10, **dadurch gekennzeichnet, dass** die Hohlstange (20) im Zuge einer Bewegung des zweiten Schließelements (12) den Stift (40) und mit dem Stift (40) den Manipulator (38) in Axialrichtung der Hohlstange (20) drückt.

12. Doppelsitzventil nach einem der Ansprüche 10 oder 11, **dadurch gekennzeichnet, dass** der Manipulator (38) durch ein Vorspannelement (62, 70), vorzugsweise eine Vorspannfeder (62, 70), in eine Ruhestellung vorgespannt ist.

13. Doppelsitzventil nach einem der Ansprüche 10 bis 12, **dadurch gekennzeichnet, dass** der Manipulator (38) an dem Sensorobjekt (34) beweglich gelagert ist, vorzugsweise über einen an dem Sensorobjekt (34) beweglich gelagerten Träger (64).

14. Doppelsitzventil nach den Ansprüchen 12 und 13, **dadurch gekennzeichnet, dass** das Sensorobjekt (34) einen Deckelabschnitt (68) aufweist, an dem sich das Vorspannelement (62, 70) abstützt.

15. Doppelsitzventil nach einem der Ansprüche 13 oder 14, **dadurch gekennzeichnet, dass** die Hohlstange (20) im Zuge einer Bewegung des zweiten Schließelements (12) den Manipulator (38) in Axialrichtung der Hohlstange (20) drückt, vorzugsweise über einen mit der Hohlstange (20) verbundenen Stößel (66).

## Claims

1. Double-seat valve comprising a first closing element (10), which can be brought into sealing contact with a first valve seat (14), comprising a second closing element (12), which can be brought into sealing contact with a second valve seat (16), a sensor object (34) coupled to the first closing element (10), and a sensor device (44) interacting with the sensor object (34), which comprises a sensor (46, 48) and an evaluation electronics (56), wherein a manipulator (38) configured to interact with the sensor object (34) interacts with the second closing element (12), and wherein the sensor device (44) is configured to detect the interaction of the manipulator (38) with the sensor object (34), **characterized in that** the manipulator (38) covers the sensor object (34) depending on the position of the first closing element (10) and/or the second closing element (12), and that the sensor device (44) determines the degree of coverage.

2. Double-seat valve according to claim 1, **characterized in that** the sensor device (44) detects the interaction of the manipulator (38) with the sensor object (34) by means of a magnetic measuring method.

3. Double-seat valve according to claim 2, **characterized in that** the sensor object (34) comprises an electrical resonant circuit, and that the manipulator (38) dips into a coil of the electrical resonant circuit in a manner influencing the magnetic flux density, depending on a position of the first closing element (10) and/or the second closing element (12).

4. Double-seat valve according to claim 3, **characterized in that** the manipulator (38) is rod-shaped.

5. Double-seat valve according to one of claims 3 or 4, **characterized in that** the manipulator (38) has sections with different magnetic properties.

6. Double-seat valve according to one of the preceding claims, **characterized in that** the sensor object (34) is coupled to a valve rod (18) connected to the first closing element (10).

7. Double-seat valve according to claim 6, **characterized in that** the second closing element (12) is connected to a hollow rod (20), and that the valve rod (18) passes through the second closing element (12) and the hollow rod (20).

8. Double-seat valve according to one of the preceding claims, **characterized in that** the manipulator (38) is coupled to the second closing element (12).

9. Double-seat valve according to claims 7 and 8, **characterized in that** the manipulator (38) is connected at an end facing the second closing element (12) to a pin (40) which is connected to the hollow rod (20), wherein the pin (40) is guided in elongated holes (42) of the valve rod (18) or of a carrier (36) coupled to the valve rod (18) on the one hand and to the sensor object (34) on the other hand.

10. Double-seat valve according to one of claims 1 to 7, **characterized in that** between the manipulator (38) and the second closing element (12) there is a distance (58) that changes during a movement of the second closing element (12).

11. Double-seat valve according to claims 7, 9 and 10, **characterized in that** the hollow rod (20), in the course of a movement of the second closing element (12), pushes the pin (40) and, with the pin (40), the manipulator (38) in the axial direction of the hollow rod (20).

12. Double-seat valve according to one of claims 10 or 11, **characterized in that** the manipulator (38) is pre-tensioned into a rest position by a pre-tensioning element (62, 70), preferably a pre-tensioning spring (62, 70).

13. Double-seat valve according to one of claims 10 to 12, **characterized in that** the manipulator (38) is movably mounted on the sensor object (34), preferably via a carrier (64) movably mounted on the sensor object (34).

14. Double-seat valve according to claims 12 and 13, **characterized in that** the sensor object (34) has a cover section (68) on which the pre-tensioning element (62, 70) is supported.

15. Double-seat valve according to one of claims 13 or 14, **characterized in that** the hollow rod (20), in the course of a movement of the second closing element (12), pushes the manipulator (38) in the axial direction of the hollow rod (20), preferably via a tappet (66) connected to the hollow rod (20).

## Revendications

1. Soupape à double siège comprenant un premier élément de fermeture (10), lequel peut être mis en contact étanche avec un premier siège de soupape (14), un deuxième élément de fermeture (12), lequel peut être mis en contact étanche avec un deuxième siège de soupape (16), un objet de capteur (34) accouplé au premier élément de fermeture (10) et un dispositif à capteur (44) coopérant avec l'objet de capteur (34), lequel comporte un capteur (46, 48) et une électronique d'évaluation (56), dans laquelle un manipulateur (38) configuré pour coopérer avec l'objet de capteur (34) coopère avec le deuxième élément de fermeture (12), et dans laquelle le dispositif à capteur (44) est configuré pour détecter la coopération du manipulateur (38) avec l'objet de capteur (34), **caractérisée en ce que** le manipulateur (38) recouvre l'objet de capteur (34) en fonction de la position du premier élément de fermeture (10) et/ou du deuxième élément de fermeture (12), et **en ce que** le dispositif à capteur (44) détermine le degré de recouvrement.

2. Soupape à double siège selon la revendication 1, **caractérisée en ce que** le dispositif à capteur (44) détecte la coopération du manipulateur (38) avec l'objet de capteur (34) par un procédé de mesure magnétique.

3. Soupape à double siège selon la revendication 2, **caractérisée en ce que** l'objet de capteur (34) comporte un circuit oscillant électrique, et **en ce que** le manipulateur (38) plonge dans une bobine du circuit oscillant électrique, en fonction d'une position du premier élément de fermeture (10) et/ou du deuxième élément de fermeture (12), en influençant la densité de flux magnétique.

4. Soupape à double siège selon la revendication 3, **caractérisée en ce que** le manipulateur (38) est conçu en forme de barre.

5. Soupape à double siège selon l'une des revendications 3 ou 4, **caractérisée en ce que** le manipulateur (38) présente des sections dotées de différentes propriétés magnétiques.

6. Soupape à double siège selon l'une des revendications précédentes, **caractérisée en ce que** l'objet de capteur (34) est accouplé à une tige de soupape (18) reliée au premier élément de fermeture (10).

7. Soupape à double siège selon la revendication 6, **caractérisée en ce que** le deuxième élément de fermeture (12) est relié à une tige creuse (20), et **en ce que** la tige de soupape (18) traverse le deuxième élément de fermeture (12) et la tige creuse (20).

8. Soupape à double siège selon l'une des revendications précédentes, **caractérisée en ce que** le manipulateur (38) est accouplé au deuxième élément de fermeture (12).

9. Soupape à double siège selon les revendications 7 et 8, **caractérisée en ce qu'**à une extrémité tournée vers le deuxième élément de fermeture (12), le manipulateur (38) est relié à une broche (40), laquelle est reliée à la tige creuse (20), la broche (40) étant guidée dans des trous oblongs (42) de la tige de soupape (18) ou d'un support (36) accouplé d'une part à la tige de soupape (18) et d'autre part à l'objet de capteur (34).

10. Soupape à double siège selon l'une des revendications 1 à 7, **caractérisée en ce qu'**un espacement (58) variant lors d'un mouvement du deuxième élément de fermeture (12) est présent entre le manipulateur (38) et le deuxième élément de fermeture (12).

11. Soupape à double siège selon les revendications 7, 9 et 10, **caractérisée en ce que** la tige creuse (20) pousse la broche (40) et avec la broche (40) le manipulateur (38) dans la direction axiale de la tige creuse (20) pendant le mouvement du deuxième élément de fermeture (12).

12. Soupape à double siège selon l'une des revendications 10 ou 11, **caractérisée en ce que** le manipulateur (38) est sollicité vers une position de repos par un élément de sollicitation (62, 70), de préférence un ressort de sollicitation (62, 70).

13. Soupape à double siège selon l'une des revendications 10 à 12, **caractérisée en ce que** le manipulateur (38) est monté de manière mobile sur l'objet de capteur (34), de préférence par le biais d'un support (64) monté de manière mobile sur l'objet de capteur (34).

14. Soupape à double siège selon les revendications 12 et 13, **caractérisée en ce que** l'objet de capteur (34) présente une section de couvercle (68), sur laquelle s'appuie l'élément de sollicitation (62, 70).

15. Soupape à double siège selon l'une des revendications 13 ou 14, **caractérisée en ce que** la tige creuse (20) pousse le manipulateur (38) dans la direction axiale de la tige creuse (20), de préférence par le biais d'un poussoir (66) relié à la tige creuse (20), pendant un mouvement du deuxième élément de fermeture (12).
